# EUROPÄISCHE PATENTANMELDUNG

(11) **EP 1 686 090 A1**
(43) Veröffentlichungstag der Anmeldung: **02.08.2006**
(21) Anmeldenummer: 06000309.2
(22) Anmeldetag: 09.01.2006
(51) Int. Cl.: B67D 5/22, B67D 5/04, G01F 1/12

(54) **Verfahren zum Erfassen der Kraftstoffmenge beim Betanken eines Kraftfahrzeugs**

(30) Priorität: 28.01.2005 DE 102005004138
(71) Anmelder: FAFNIR GmbH, D-22765 Hamburg (DE)
(72) Erfinder: Kunter, Stefan, 22337 Hamburg (DE)
(74) Vertreter: UEXKÜLL & STOLBERG

(57) **Zusammenfassung**

Bei einem Verfahren zum Erfassen der Kraftstoffmenge beim Betanken eines Kraftfahrzeugs werden das Volumen des während des Betankungsvorgangs zu dem Kraftfahrzeug geleiteten Kraftstoffs und die Temperatur des Kraftstoffs gemessen. Das gemessene Volumen wird mittels der gemessenen Temperatur auf vorgegebene Temperaturbedingungen korrigiert, und zwar in einer Überwachungseinheit (22) für ein Gasrückführungssystem. Vorzugsweise enthält ein Nachrüstsatz für eine Vorrichtung zur Durchführung des Verfahrens einen Temperaturfühler (28) und eine Ergänzungseinrichtung zu der Überwachungseinheit (22) für das Gasrückführungssystem.

## Beschreibung

Die Erfindung betrifft ein Verfahren zum Erfassen der Kraftstoffmenge beim Betanken eines Kraftfahrzeugs.

Beim Betanken eines Kraftfahrzeugs auf einer Tankstelle wird Kraftstoff aus einem Lagertank mit Hilfe einer Kraftstoffpumpe durch einen Kraftstoff-Volumenstrommesser gefördert und über einen Zapfschlauch in den Tank des Kraftfahrzeugs geleitet. Der Kraftstoff-Volumenstrommesser (Durchflussmesser) gibt Impulse ab, die über einen Zapfsäulenrechner als in den Tank des Kraftfahrzeugs eingefülltes Volumen angezeigt werden.

Im Stand der Technik wird die Kraftstoffmenge also als Volumen angezeigt, obwohl der Kraftstoff eigentlich nach Gewicht (Masse) verkauft werden müsste, da das Volumen einer gegebenen Kraftstoffmenge (Masse) wegen der Temperaturabhängigkeit der Dichte nicht konstant ist.

Es ist üblich, bei der Kalibrierung von Zapfsäulen die Volumenanzeige auf eine vorgegebene Temperatur zu beziehen, in der Regel auf die mittlere Jahrestemperatur des Kraftstoffs (der meist unterirdisch gelagert wird) in dem betreffenden Land oder Gebiet.

Da sich die Dichte von Kohlenwasserstoffen mit steigender Temperatur in der Größenordnung von 0,1 % pro Grad verringert, was eine relativ starke Temperaturabhängigkeit ist, kann die bei einem Betankungsvorgang gemäß der Volumenanzeige verkaufte Kraftstoffmenge häufig relativ stark von der tatsächlich getankten Kraftstoffmasse abweichen.

Aus der EP 0 772 567 B1 und der EP 0 993 619 A1 sind temperaturkompensierende Kraftstoffabgabevorrichtungen bekannt, mit denen eine Temperaturkorrektur an dem gemessenen Kraftstoffvolumen durchführt werden kann. In beiden Fällen sind jedoch relativ aufwändige zusätzliche elektronische Komponenten erforderlich.

Es ist Aufgabe der Erfindung, eine Möglichkeit zum korrekten Erfassen der Kraftstoffmenge beim Betanken eines Kraftfahrzeugs zu schaffen, die sich ohne kostspielige Zusatzbauteile ausführen lässt.

Diese Aufgabe wird gelöst durch ein Verfahren mit den Merkmalen des Anspruchs 1 sowie eine Vorrichtung mit den Merkmalen des Anspruchs 8. Der Anspruch 10 betrifft einen Nachrüstsatz zur Realisierung einer derartigen Vorrichtung. Vorteilhafte Ausgestaltungen der Erfindung ergeben sich aus den Unteransprüchen.

Bei dem erfindungsgemäßen Verfahren zum Erfassen der Kraftstoffmenge beim Betanken eines Kraftfahrzeugs wird das Volumen des während des Betankungsvorgangs zu dem Kraftfahrzeug geleiteten Kraftstoffs gemessen, was in herkömmlicher Weise mit Hilfe eines Kraftstoff-Durchflussmessers erfolgen kann. Ferner wird die Temperatur des Kraftstoffs gemessen, vorzugsweise in oder an einer Kraftstoffleitung, die zum Beispiel innerhalb einer Zapfsäule angeordnet ist. Das gemessene Volumen wird mittels der gemessenen Temperatur auf vorgegebene Temperaturbedingungen korrigiert.

Wenn die Tankstelle mit einem Gasrückführungssystem ausgerüstet ist, wie es in vielen Ländern Vorschrift ist, befindet sich in einer Zapfsäule eine Überwachungseinheit für das Gasrückführungssystem. Derartige Überwachungssysteme für die Gasrückführung sind z.B. aus der DE 100 31 813 A1 bekannt. Im Rahmen des erfindungsgemäßen Verfahrens werden die Schritte des Korrigierens in der Überwachungseinheit für das Gasrückführungssystem durchgeführt. Dies hat den Vorteil, dass im Gegensatz zu den vorbekannten Verfahren zur Berücksichtigung der Temperaturabhängigkeit der Kraftstoffdichte keine aufwändigen zusätzlichen elektronischen Komponenten in die Zapfsäule eingebaut werden müssen, sondern dass die ohnehin vorhandene Überwachungseinheit zum Korrigieren auf vorgegebene Temperaturbedingungen genutzt werden kann.

Wenn die Überwachungseinheit mit einem Zapfsäulenrechner verbunden ist, werden dem Zapfsäulenrechner vorzugsweise anstelle von Kraftstoffvolumen-Impulsen, die für das gemessene Volumen charakteristisch sind, Kraftstoffvolumen-Impulse übermittelt, die für das korrigierte Volumen charakteristisch sind. Diese korrigierten Kraftstoffvolumen-Impulse werden dabei von der Überwachungseinheit berechnet und bereitgestellt, sodass die von dem Zapfsäulenrechner erzeugte Volumenanzeige dem korrigierten Volumen entspricht, ohne dass an dem Zapfsäulenrechner irgendwelche Änderungen vorgenommen werden müssen.

Beim Korrigieren wird vorzugsweise das gemessene Volumen mit dem Quotienten aus der Dichte des Kraftstoffs bei der gemessenen Temperatur und der Dichte des Kraftstoffs bei der vorgegebenen Temperatur multipliziert. Da die Zusammensetzung des Kraftstoffs zumindest näherungsweise bekannt ist, kann man die Dichte als Funktion der Temperatur z.B. einer Tabelle entnehmen, die in der als Auswerteeinheit dienenden Überwachungseinheit abgespeichert ist. Wenn also die Temperatur des Kraftstoffs höher ist als die vorgegebene Temperatur (die z.B. mit der herkömmlichen mittleren Jahrestemperatur des Kraftstoffs übereinstimmt), ist die Dichte des Kraftstoffs geringer und das gemessene Volumen größer, als es der Masse des Kraftstoffs entspricht; ohne Korrektur würde also der Kraftstoff zu teuer verkauft werden. Bei niedrigen Temperaturen liegen umgekehrte Verhältnisse vor. Durch die Korrektur wird gewährleistet, dass als Volumen ein Zahlenwert angezeigt wird, der der tatsächlichen Masse des gelieferten Kraftstoffs proportional ist. Vorzugsweise wird beim Korrigieren auf die Temperaturbedingungen korrigiert, die der Preisgestaltung zugrundeliegen.

In einer Ausweitung des erfindungsgemäßen Verfahrens kann die Überwachungseinheit zusätzlich dafür genutzt werden, um das gemessene Volumen des Kraftstoffs entsprechend der während des Betankungsvorgangs von dem Kraftfahrzeug abgesaugten Gasmenge zu korrigieren. Herkömmlicherweise findet eine solche Korrektur nicht statt. Bei Kohlenwasserstoffen mit ihrem relativ hohen Molekulargewicht ist jedoch die Masse des Kraftstoffdampfes, der während eines Betankungsvorgangs von dem Gasrückführungssystem aus dem Tank des Kraftfahrzeugs gesaugt und in den Lagertank der Tankstelle geleitet wird, nicht mehr vernachlässigbar. Damit der Kunde diesen Kraftstoffdampf nicht mehr kostenlos an die Tankstelle abgeben muss, eröffnet die Erfindung die Möglichkeit, den während eines Betankungsvorgangs beim Betrieb des Gasrückführungssystems gemessenen Gasvolumenstrom mittels der zumindest näherungsweise bekannten Dichte des Kraftstoffgases (die gegebenenfalls noch temperaturkorrigiert werden kann) in eine Kraftstoffmasse (oder kontinuierlich in einen Kraftstoffmassenstrom) umzurechnen. Die Volumenanzeige der Zapfsäule kann damit korrigiert werden, ähnlich wie oben im Zusammenhang mit der Temperaturkorrektur erläutert.

Wie bereits angedeutet, werden die Schritte des Korrigierens vorzugsweise kontinuierlich während des Betankungsvorgangs durchgeführt, sodass die Volumenanzeige einer Zapfsäule laufend korrigierte Werte anzeigt, die proportional zur tatsächlich eingefüllten Kraftstoffmenge (Kraftstoffmasse) sind. Es ist aber auch denkbar, die Korrekturrechnung erst nach Beendigung des Tankvorgangs durchzuführen, wobei die Volumenanzeige noch auf einen korrigierten Wert umspringen kann oder wobei lediglich der angezeigte Verkaufspreis geändert wird.

Bei einer Vorrichtung zur Durchführung des erfindungsgemäßen Verfahrens wird eine Überwachungseinheit für ein Gasrückführungssystem benutzt, um die Korrekturen durchzuführen, wie erläutert. Eine vorhandene Anlage lässt sich daher mit Hilfe eines Nachrüstsatzes so umbauen, dass sie zur Durchführung des erfindungsgemäßen Verfahrens tauglich ist. Der Nachrüstsatz braucht lediglich einen Temperaturfühler sowie eine Ergänzungseinrichtung für die Überwachungseinheit zu enthalten. Die Ergänzungseinrichtung kann Hardware-Einrichtungen erfordern, z.B. eine Schnittstelle zum Anschließen des Temperaturfühlers. Je nach Ausgestaltung der vorhandenen Überwachungseinheit ist es aber auch denkbar, in der Ergänzungseinrichtung lediglich ein Upgrade der Software und/oder der Firmware vorzusehen. Die Umrüstung einer vorhandenen Anlage ist daher kostengünstig.

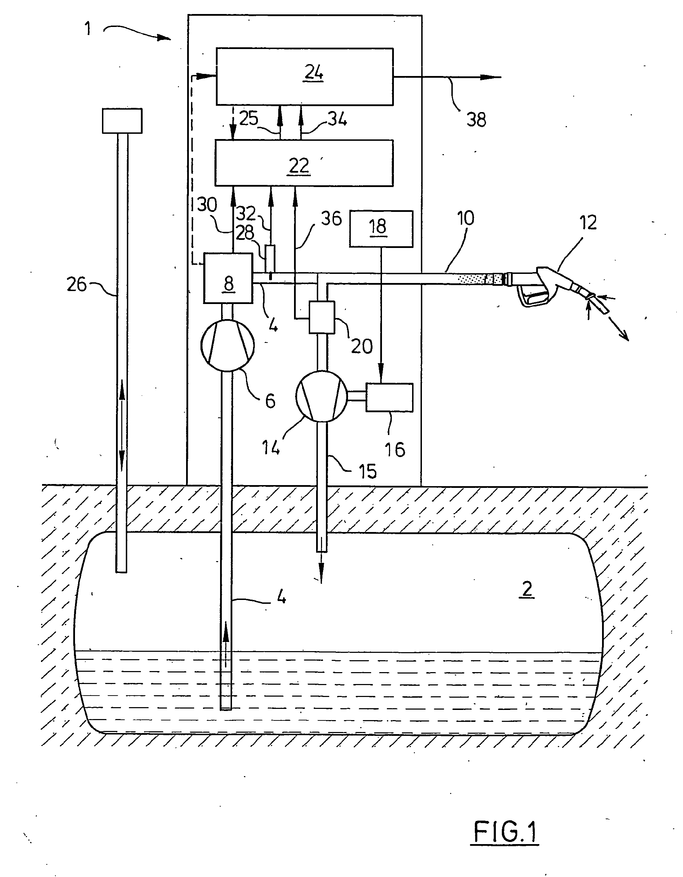

Im Folgenden wird die Erfindung anhand eines Ausführungsbeispiels weiter erläutert. Die Zeichnung zeigt in
- Figur 1: eine schematische Ansicht eines Gasrückführungssystems an einer Tankstelle mit den zum Ausführen des erfindungsgemäßen Verfahrens verwendeten Komponenten.

In Figur 1 ist in schematischer Weise eine Zapfsäule 1 auf einer Tankstelle mit den wichtigsten darin angeordneten oder der Zapfsäule 1 zugeordneten Teilen dargestellt, einschließlich der Komponenten eines Gasrückführungssystems.

Beim Betrieb der Zapfsäule 1 gelangt Kraftstoff aus einem unterirdischen Lagertank 2 über eine Kraftstoffleitung 4 und gefördert von einer Kraftstoffpumpe 6 durch einen Kraftstoff-Durchflussmesser 8 und einen Zapfschlauch 10 zu einem Zapfventil 12, von dem aus der Kraftstoff in den Tank eines Kraftfahrzeugs abgefüllt wird, wie durch den großen Pfeil angedeutet. Gleichzeitig werden die über dem flüssigen Kraftstoff im Tank des Kraftfahrzeugs stehenden Kraftstoffdämpfe (Gas) abgesaugt, was durch die beiden kleinen Pfeile am Zapfventil 12 angezeigt ist. Diese Gase werden über eine innerhalb des Zapfschlauchs 10 geführte getrennte Leitung von einer Gaspumpe 14 angesaugt und gelangen durch die Gasleitung 15 zurück in den Lagertank 2. Die Gaspumpe 14 wird von einem Antriebsmotor 16 angetrieben, der eine eigene Ansteuerelektronik 18 hat. Zum Bestimmen des Gasvolumenstroms dient ein Gas-Durchflussmesser 20.

Bei Gasrückführungssystemen der erläuterten Art muss der Gasvolumenstrom dem Kraftstoffvolumenstrom angepasst werden. Bei einfachen Systemen werden die Signale (Zählimpulse) des Kraftstoff-Durchflussmessers 8 einem Zapfsäulenrechner zugeführt (wie in Figur 1 als linke gestrichelte Linie eingezeichnet), der dementsprechend die Ansteuerelektronik 18 ansteuert, damit die Volumenförderrate der Gaspumpe 14 möglichst mit der der Kraftstoffpumpe 6 übereinstimmt. Derartige Systeme können aber nicht auf Fehler in der Gasförderung reagieren.

Daher wird heutzutage die Volumenförderrate der Gaspumpe 14 überwacht. Dazu ist in der Zapfsäule 1 eine Überwachungseinheit 22 vorgesehen, die mit dem Zapfsäulenrechner 24 verbunden ist. Bei üblichen Systemen empfängt der Zapfsäulenrechner 24 die Signale von dem Kraftstoff-Durchflussmesser 8 und spiegelt sie an die Überwachungseinheit 22, wie in Figur 1 durch die gestrichelten Verbindungen angezeigt, und auch an die Ansteuerelektronik 18. Das Signal des Gas-Durchflussmessers 20 wird direkt von der Überwachungseinheit 22 empfangen, die die Signale des Kraftstoff-Durchflussmessers 8 und des Gas-Durchflussmessers 20 vergleicht und auswertet und Statussignale 25 an den Zapfsäulenrechner 24 abgibt. Diese Statussignale werden von dem Zapfsäulenrechner 24 über eine Leitung 38 an einen Kassenrechner weitergeleitet und dort zur Anzeige gebracht (nicht dargestellt).

Der Lagertank 2 wird über einen Ventilationsmast 26 be- oder entlüftet.

Soweit gehören die erläuterten Teile und Komponenten zu einer Zapfsäule mit einem herkömmlichen Gasrückführungssystem mit einer Überwachung der Gasrückführung.

Die Figur 1 zeigt als zusätzliche Komponente einen Temperaturfühler 28, der neben dem Kraftstoff-Durchflussmesser 8 an der Kraftstoffleitung 4 angeordnet ist und die Temperatur des durch die Kraftstoffleitung 4 strömenden Kraftstoffs erfasst. Das Signal des Temperaturfühlers 28 wird auf einen Eingang der Überwachungseinheit 22 gegeben, um eine Temperaturkorrektur an dem gemessenen Kraftstoffvolumen durchführen zu können, wie im Folgenden erläutert. Ferner werden die Signale von dem Kraftstoff-Durchflussmesser 8 direkt der Überwachungseinheit 22 zugeführt, so dass die in Figur 1 gestrichelt eingezeichneten Verbindungen entfallen.

Wenn Kraftstoff durch den Kraftstoff-Durchflussmesser 8 strömt, gibt der Kraftstoff-Durchflussmesser 8 also Kraftstoffimpulse 30 auf einen Eingang der Überwachungseinheit 22 ab, die für das geförderte Kraftstoffvolumen charakteristisch sind. Gleichzeitig gelangt ein Temperatursignal 32 zu der Überwachungseinheit 22. Die Überwachungseinheit 22 errechnet daraus ein temperaturkorrigiertes Volumen. Im Ausführungsbeispiel geschieht dies, indem das gemessene Volumen mit dem Quotienten aus der Dichte des Kraftstoffs bei der von dem Temperaturfühler 28 gemessenen Temperatur und der Dichte des Kraftstoffs bei einer vorgegebenen Temperatur multipliziert wird. Wenn z.B. die von dem Temperaturfühler 28 gemessene Temperatur größer ist als die vorgegebene Temperatur, muss das gemessene Volumen nach unten korrigiert werden, denn in diesem Fall hat der Kraftstoff eine geringere Dichte, sodass die zu dem Kraftfahrzeug tatsächlich geförderte Kraftstoffmenge (d.h. Krafstoffmasse) geringer ist. Wenn z.B. jeder Kraftstoffimpuls 30 einem bestimmten Volumen entspricht, reduziert die Überwachungseinheit 22 nach der erläuterten Formel die Zahl der an den Zapfsäulenrechner 24 weitergegebenen temperaturkorrigierten Kraftstoffimpulse 34. Wenn dabei die einzelnen temperaturkorrigierten Kraftstoffimpulse 34 etwas langsamer abgegeben werden, als die unkorrigierten Kraftstoffimpulse 30 eingehen, zeigt der Zapfsäulenrechner unmittelbar ein korrigiertes Kraftstoffvolumen an. Dieses Volumen ist in dem Beispiel zwar geringer als das tatsächlich eingefüllte Volumen, dafür aber proportional zur eingefüllten Kraftstoffmasse.

Die Anordnung gemäß Figur 1 ermöglicht noch eine weitere Korrektur. Dazu wertet die Überwachungseinheit 22 das von dem Gas-Durchflussmesser 20 abgegebene Gas-Durchflusssignal 36 aus, z.B. indem aus dem gemessenen Gasvolumenstrom und der Außentemperatur die Masse des in den Lagertank 2 rückgeführten Kraftstoffs berechnet und mittels bekannter Dichtewerte für flüssigen Kraftstoff in ein Volumen für flüssigen Kraftstoff gewandelt wird, das von dem temperaturkorrigierten Kraftstoffvolumen subtrahiert wird. Die Umsetzung in korrigierte Kraftstoffimpulse, die an den Zapfsäulenrechner 24 weitergegeben werden, kann in der gleichen Weise erfolgen, wie zuvor im Zusammenhang mit der Temperaturkorrektur beschrieben.

Der Zapfsäulenrechner 24 zeigt das korrigierte Volumen direkt an der Zapfsäule 1 an und übermittelt zusätzlich die entsprechenden Daten über die Leitung 38 zu einem Kassenrechner.

## Patentansprüche

1. Verfahren zum Erfassen der Kraftstoffmenge beim Betanken eines Kraftfahrzeugs, mit den Schritten:
- Messen des Volumens des während des Betankungsvorgangs zu dem Kraftfahrzeug geleiteten Kraftstoffs,
- Messen der Temperatur des Kraftstoffs,
- Korrigieren des gemessenen Volumens mittels der gemessenen Temperatur auf vorgegebene Temperaturbedingungen, wobei die Schritte des Korrigierens in einer Überwachungseinheit (22) für ein Gasrückführungssystem durchgeführt werden.

2. Verfahren nach Anspruch 1, **dadurch gekennzeichnet, dass** beim Korrigieren das gemessene Volumen mit dem Quotienten aus der Dichte des Kraftstoffs bei der gemessenen Temperatur und der Dichte des Kraftstoffs bei der vorgegebenen Temperatur multipliziert wird.

3. Verfahren nach Anspruch 1 oder 2, **dadurch gekennzeichnet, dass** beim Korrigieren auf die Temperaturbedingungen korrigiert wird, die der Preisgestaltung zugrunde liegen.

4. Verfahren nach einem der Ansprüche 1 bis 3, **dadurch gekennzeichnet, dass** die Temperatur des Kraftstoffs in oder an einer Kraftstoffleitung (4) gemessen wird, die vorzugsweise innerhalb einer Zapfsäule (1) angeordnet ist.

5. Verfahren nach einem der Ansprüche 1 bis 4, **dadurch gekennzeichnet, dass** die Überwachungseinheit (22) mit einem Zapfsäulenrechner (24) verbunden ist und dem Zapfsäulenrechner (24) Kraftstoffvolumen-Impulse (34) übermittelt, die für das korrigierte Volumen charakteristisch sind.

6. Verfahren nach einem der Ansprüche 1 bis 5, **dadurch gekennzeichnet, dass** die Überwachungseinheit (22) das gemessene Volumen des Kraftstoffs zusätzlich entsprechend der während des Betankungsvorgangs von dem Kraftfahrzeug abgesaugten Gasmenge korrigiert.

7. Verfahren nach einem der Ansprüche 1 bis 6, **dadurch gekennzeichnet, dass** die Schritte des Korrigierens kontinuierlich während des Betankungsvorgangs durchgeführt werden.

8. Vorrichtung zur Durchführung des Verfahrens nach einem der Ansprüche 1 bis 7.

9. Vorrichtung nach Anspruch 8, mit einem Temperaturfühler (28) und einer Ergänzungseinrichtung zu einer Überwachungseinheit (22) für ein Gasrückführungssystem.

10. Nachrüstsatz für eine Vorrichtung nach Anspruch 9, mit einem Temperaturfühler (28) und einer Ergänzungseinrichtung zu einer Überwachungseinheit (22) für ein Gasrückführungssystem.
